Europäisches Patentamt

European Patent Office

Office européen des brevets

(11) Publication number: **0 356 634**

**A1**

## EUROPEAN PATENT APPLICATION

(21) Application number: 89110582.7

(22) Date of filing: 12.06.89

(51) Int. Cl.5 **C08K 5/00** , **C08L 71/12** , //(C08K5/00,5:09,5:5333)

(30) Priority: 22.08.88 NL 8802068

(43) Date of publication of application:
07.03.90 Bulletin 90/10

(84) Designated Contracting States:
DE ES FR GB IT NL

(71) Applicant: GENERAL ELECTRIC COMPANY
1 River Road
Schenectady New York 12151(US)

(72) Inventor: Claesen, Christianus Adrianus
Arnoldus
General Electric Plastics B.V. P.O. Box 117
NL-4600 AC Bergen op Zoom(NL)
Inventor: Lohmeijer, Johannes Hubertus
Gabriel Marie
General Electric Plastics B.V. P.O. Box 117
NL-4600 AC Bergen op Zoom(NL)

(74) Representative: Schüler, Horst, Dr. et al
General Electric Praunheimer Landstrasse
50
D-6000 Frankfurt 90(DE)

(54) Polymer material based on high-impact polyphenylene ether mixture.

(57) The invention relates to a polymer material based on a high-impact polyphenylene ether mixture which comprises aluminium-methyl-methyl phosphonate as a flame retardant and also a fatty acid having 12-20 carbon atoms or a salt thereof with a metal from the group IIA or IIB of the Periodic Table of the Elements or a compound of the formula $RO-(C_2H_4O)_nCH_2COOM$, wherein R is a hydrocarbon radical having 12-18 carbon atoms, n is an integer having an average value of 1-10 and M is a metal from the group II of the Periodic Table of the Elements, in a quantity from 1 to 10% by weight related to the polymer mixture.

EP 0 356 634 A1

**Polymer material based on a high-impact polyphenylene ether mixture.**

The invention relates to a polymer material based on a high-impact polyphenylene ether mixture which comprises aluminium-methyl-methyl phosphonate as a flame retardant. Such materials are known from EP-A-0 245 207. Although this aluminium salt provides a good flame-retarding activity, it causes an unacceptable extent of deterioriation of the impact strength of the said materials.

It has been found surprisingly that the addition of conventionally used fatty acids or salts hereof with metals from the group IIA or IIB or capillarily active agents of the polyoxyethylene carboxylic acid type, again considerably increases the impact strength of the articles manufactured from the said material without substantially influencing the combustibility properties.

The invention therefore provides a polymer material described in the opening paragraph which is characterised in that it also comprises a fatty acid having 12-20 carbon atoms or a salt thereof with a metal from the group IIA or IIB of the Periodic Table of Elements or a compound of the formula $R-O(C_2H_4O)_nCH_2OOM$, wherein R is a hydrocarbon radical having 12-18 carbon atoms, $n$ is an integer having an average value of 1-10 and M is a metal from the group II of the Periodic Table of the Elements, in a quantity from 1 to 10% by weight related to the polymer mixture.

The high-impact polyphenylene ether mixture may be one of the conventionally used mixtures, for example, a mixture of polyphenylene ether with high-impact polystyrene or a mixture of polyphenylene ether with EPDM-rubber.

The aluminium-methyl-methyl phosphonate is preferably present in a quantity of 5-10% by weight related to the polymer mixture.

The fatty acid or the fatty acid salt or the polyoxylethylene carboxylic acid derivative is preferably present in a quantity of 3-6% by weight related to the polymer mixture.

Stearic acid or its salts with metals from the group II are to be considered in particular as a fatty acid or a fatty acid salt. Particularly good results are obtained with calcium stearate.

The compounds $RO-(C_2H_4O)_n-CH_2-COOM$ are also used preferably as a calcium salt, while R preferably is a stearyl group. Compounds of this type have long been known already and been commercially available. They are simply prepared by ethoxylating a fatty alcohol R-OH and converting the ethoxylation product with a salt of an halogenated acetic acid.

The materials of the invention may moreover comprise one or more additives conventionally used for such materials, for example, fillers, reinforcing fibres, stabilisers, pigments and dyes, plasticisers, mould release agents and agents to improve the notch impact value. The flame-retarding activity may also be further intensified by means of a tetra-arylphenylene diphosphate, as described in greater detail in a Patent Application filed simultaneously with the present Application (ref.: 8-CB-10,439).

The present materials are simply prepared by mixing before or during the usual extrusion.

Although the invention is not dependent on or restricted by theoretical considerations, it is assumed that the aluminium-methyl-methyl phosphonate in itself shows a tendency to agglomeration, which, of course, is detrimental. The addition of the invention counteracts the said agglomeration, apparently in that it envelops the particles of the aluminium salt. Under an electron microscope, smaller particles of the aluminium salt are hence observed in the presence of the addition than in the absence thereof.

The invention will now be described in greater detail with reference to the ensuing specific examples.

EXAMPLE 1

Four polymer mixtures of the following composition were prepared:

|  | 1 | 2 | 3 | 4 |
|---|---|---|---|---|
| Polyphenylene ether (PPO®) | 35 | 35 | 35 | 35 |
| High-impact polystyrene (HIPS) | 65 | 65 | 65 | 65 |
| Al-methyl-methyl phosphonate (AMMP) (ground) | - | 7.5 | 7.5 | 7.5 |
| Zinc stearate | - | - | 2 | 3 |
| Test results : |  |  |  |  |
|  | 1 | 2 | 3 | 4 |
| Izod notch impact value, J/m | 192 | 121 | 146 | 162 |
| UL-94[a]) (1.6 mm) | V-1 | V-1 | V-1 | V-1 |

[a])Underwriter's Laboratory combustibility test

## Example 2

Five mixtures of the following compositions were prepared

|  | 1 | 2 | 3 | 4 | 5 |
|---|---|---|---|---|---|
| PPO® | 35 | 35 | 35 | 35 | 35 |
| HIPS | 65 | 65 | 65 | 65 | 65 |
| AMMP | - | 8 | 8 | 8 | 8 |
| Zinc stearate | - | - | 4 | - | - |
| Stearic acid | - | - | - | 4 | - |
| Calcium stearate | - | - | - | - | 4 |
| Test results |  |  |  |  |  |
| UL-94 (1.6 mm) | - | V-1 | V-2 | V-1 | V-1 |
| Izod notch impact value (J/m) | 260 | 130 | 172 | 179 | 220 |

**Claims**

1. A polymer material based on a high-impact polyphenylene ether mixture which comprises aluminium-methyl-methylphosphonate as a flame retardant, characterised in that it also comprises a fatty acid having 12-20 carbon atoms or a salt thereof with a metal from the group IIA or IIB of the Period Table of the Elements or a compound of the formula $RO\text{-}(C_2H_4O)_nCH_2COOM$, wherein R is a hydrocarbon radical having 12-18 carbon atoms, n is an integer with an average value of 1-10 and M is a metal of the group II, in a quantity from 1 to 10% by weight related to the polymer mixture.

2. A polymer material as claimed in Claim 1, characterised in that the polyphenylene ether mixture is a mixture having a high-impact polystyrene.

3. A polymer material as claimed in Claim 1, charactarised in that the polyphenylene ether mixture is a mixture having EPDM-rubber.

4. A polymer material as claimed in Claims 1-3, characterised in that the aluminium-methyl-methyl phosphonate is present in a quantity of 5-10% by weight related to the polymer mixture.

5. A polymer material as claimed in Claims 1-4, characterised in that the fatty acid or the fatty acid salt is stearic acid or a salt thereof.

6. A polymer material as claimed in Claims 1-5, characterised in that the fatty acid and the compound of the formula $RO\text{-}(C_2H_4O)_n\text{-}CH_2COOM$, respectively, is a calcium salt.

7. A polymer material as claimed in Claims 1-6, characterised in that the fatty acid or fatty acid salt or the compound of the formula $RO(C_2H_4O)_nCH_2COOM$ is present in a quantity of 3-6% by weight related to

3

the polymer mixture.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 245 207  (CIBA-GEIGY)<br>* Claims; page 12, example 16 *<br>--- | 1-7 | C 08 K    5/00<br>C 08 L   71/12 //<br>(C 08 K    5/00<br>C 08 K    5:09<br>C 08 K    5:533) |
| A | DE-A-3 111 647  (BASF)<br>* Claim *<br>----- | 1-7 | |

TECHNICAL FIELDS
SEARCHED (Int. Cl.5)

C 08 K
C 08 L

The present search report has been drawn up for all claims

| Place of search | Date of completion of the search | Examiner |
|---|---|---|
| THE HAGUE | 22-11-1989 | HOFFMANN K.W. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document